# EUROPÄISCHE PATENTSCHRIFT

(11) **EP 0 836 079 B1**
(45) Veröffentlichungstag und Bekanntmachung des Hinweises auf die Patenterteilung: **22.08.2001**
(21) Anmeldenummer: 97117580.7
(22) Anmeldetag: 10.10.1997
(51) Int. Cl.: G01D 11/24, H02K 11/00

(54) **Drehkodierer**
Rotary encoder
Codeur rotatif

(30) Priorität: 11.10.1996 DE 19641929
(43) Veröffentlichungstag der Anmeldung: 15.04.1998
(73) Patentinhaber: PWB-Ruhlatec Industrieprodukte GmbH, 99846 Seebach (DE)
(72) Erfinder: Mleinek, Klaus, 99846 Seebach (DE); Kieselbach, Jürgen, 99891 Schmerbach (DE)
(74) Vertreter: Müller-Wolff, Thomas, Dipl.-Ing.

(56) Entgegenhaltungen:
- DE-A- 3 232 258
- US-A- 4 034 612
- US-A- 4 753 112
- "Motor Encoder" IBM TECHNICAL DISCLOSURE BULLETIN, Bd. 30, Nr. 3, August 1987, ARMONK, NEW YORK, USA, Seiten 968-971, XP002051535

## Beschreibung

Die Erfindung betrifft einen Encoder mit teilbarem Gehäuse zum stirnseitigen Anflanschen an einen Motor der zumindest an der Flanschebene eine in das Gehäuse hineinragende Motorwelle aufweist, wobei in dem Gehäuse ein Sensor, eine Leiterplatte und eine Taktscheibe untergebracht ist und wobei die Taktscheibendrehachse zentrisch auf der Motorwelle justiert ist.

Der Reflektionssensor ist zusammen mit einer Taktscheibe, die achsial fluchtend auf der Motorwelle justiert werden soll, in einem Gehäuse untergebracht. Das Gehäuse ist an der Wellenaustrittsseite des Motors angeflanscht.

Aus der Zeitschrift "Motorencoder" IBM Technical Disclosure Bulletin, Band 30, Nr. 3, August 1987, Armonk, New York, USA, Seiten 968 bis 971, XP002051535 ist es bekannt, eine Grundplatte an die Flanschebene eines Motors zu schrauben und dann die Taktscheibe auf der Welle über eine Justiervorrichtung genau auszurichten. Üblicherweise ist die Taktscheibe an einer Nabe mit Schrauben befestigt, die wiederum auf die Welle aufgesteckt wird. Von oben wird ein Gehäuse auf die Grundplatte aufgesteckt und über Schrauben befestigt, wobei innerhalb des Gehäuses seitlich von der Welle eine Sensoreinheit angeordnet ist. Eine Maske wird seitlich über die Taktscheibe geschoben und ebenfalls durch Schrauben justiert. Da die Maske integraler Bestandteil der Grundplatte ist, erfolgt die Ausrichtung und Justierung über entsprechende Schrauben an der Grundplatte. Über von außen zugängliche Schlitze können die Stellungen der Maske verändert werden.

Zwar sind grundsätzlich auch andere Befestigungsmethoden von Deckeln oder Gehäuseteilen auf Grundplatten oder dergleichen möglich. So ist beispielsweise in dem US-A 4 753 112 ein Bajonettverschluß in einem Ring integriert, der auf einen Behälter aufschraubbar ist. Mit der bekannten Anordnung kann aber nicht das Problem der Justierung oder Fixierung im Bezug auf Taktscheiben und Reflektionssensor eines Encoders gelöst werden. Bei dieser Art des Gehäuseaufbaus sind die Gehäuseabmessungen in Breite und Höhe bedeutend größer, als sie aufgrund der Einzelelemente sein müßten. Es hat sich zudem als nachteilig erwiesen, daß zur Montage und Justierung erhebliche Zeit und Spezialwerkzeuge benötigt werden. Außerdem ist das Montageergebnis nicht immer zufriedenstellend, so daß unter ungünstigen Umständen eine Nachjustierung erforderlich wird.

Aufgabe der vorliegenden Erfindung ist es daher, diese Nachteile durch einen einfachen und fertigungsgerechten Aufbau des Mini-Encoders zu verbessern, der in seinen Abmessungen um ca. 50 % gegenüber dem bisherigen Modell verkleinert werden soll.

Der neue Mini-Encoder besteht aus 2 getrennten Baugruppen, wobei der Reflektionssensor zusammen mit der Taktscheibe mittels einer Sicherungsscheibe im Gehäuse vormontiert ist, während die Grundplatte mit Justier- und Fixierelementen ausgebildet ist.

Im einzelnen ist der Aufbau aus den beiliegenden Zeichnungen erkennbar.

Figur 1 zeigt den Gesamtaufbau in Explosions-Darstellung.

Figur 2 zeigt das Gehäuse mit sämtlichen Einbauten und einen Teil der Grundplatte im Querschnitt.

Figuren 3a und 3b zeigen die Funktion der Bajonettsegmente in Seitenansicht.

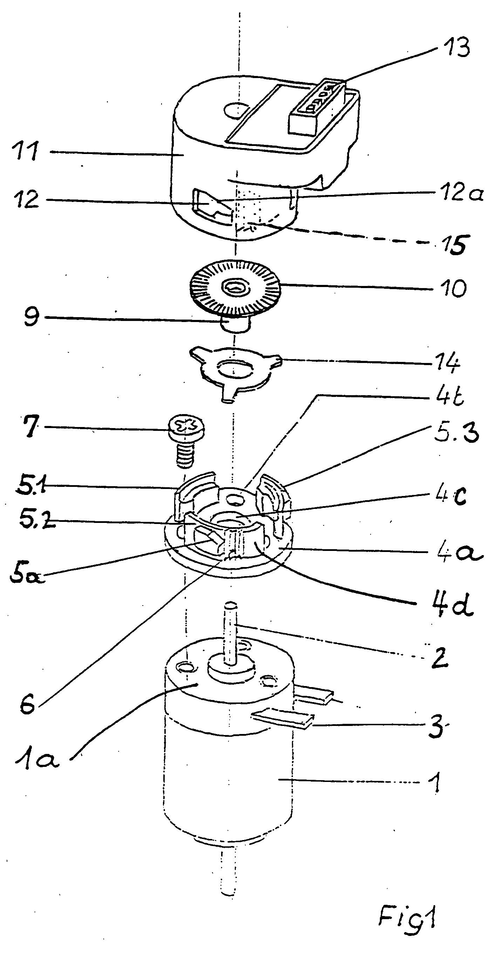

In Figur 1 ist ein Motor 1 in Vertikallage mit einer nach oben herausragenden Motorwelle 2 und mit seitlich herausgeführten Stromanschlüssen 3 dargestellt.

Oberhalb der Motorwelle 2 befindet sich eine Grundplatte 4, die in Achsrichtung auf der als Flanschebene ausgebildeten Oberseite des Motors aufgeschraubt wird.

Auf der Grundplatte 4 sind ringförmig angeordnete BajonettSegmente 5.1, 5.2, 5.3 befestigt. Die Bajonettverschlußelemente sind symmetrisch am Umfang verteilt und erheben sich in radialer Richtung auf der Ringaußenfläche der Segmente bis an die Peripherie der Flanschebene 4a der Grundplatte 4. Darüber hinaus enthält die Grundplatte 4 noch Befestigungsbohrungen 4b für die Schrauben 7 und eine Zentralbohrung 4c sowie Führungsflächen 4d, die über den Umfang der Grundplatte verteilt an den Außenflächen der Bajonettsegmente 5 angeordnet sind.

Beim Befestigen der Grundplatte 4 auf der Motorstirnseite 1a wird die Motorwelle 2 durch die zentrale Bohrung 4c gesteckt fund mittels Schrauben befestigt. Die Motorwelle 2 weist vorzugsweise an ihrer Spitze eine Fase oder Abrundung auf, so daß die Motorwelle 2 leicht in die Bohrung eines Taktscheibenhalters der Nabe 9 eingeführt werden kann.

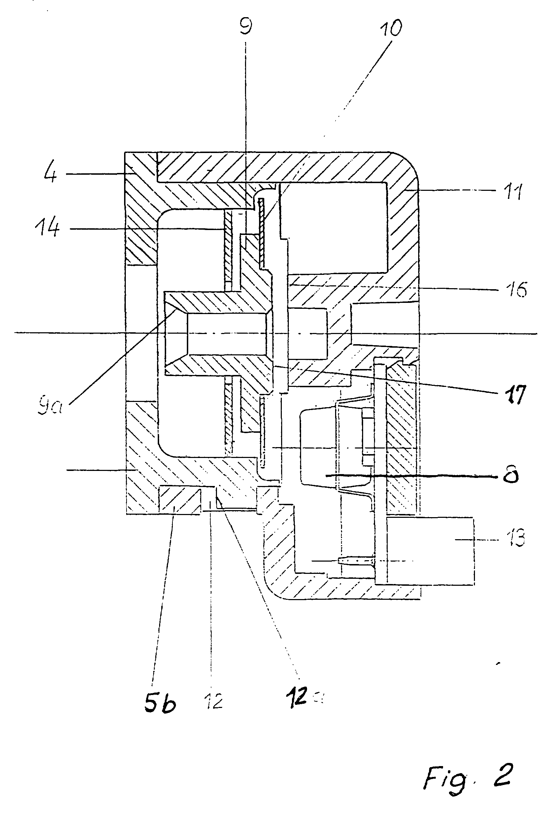

In Figur 2 ist die vormontierte Gehäuseeinheit mit allen Einbauten dargestellt. Diese bestehen aus der auf einer Nabe 9 gehaltenen Taktscheibe 10, die durch einen Sicherungsring 14 im Gehäuse gegen Herausfallen gesichert ist. Dadurch ist der Transport der vormontierten Baugruppe problemlos und ohne spezielle Transporthalterung möglich. Am oberen Ende der Nabe 9 ist eine Zentrierfläche 17 ausgebildet. Diese Zentrierfläche 17 ist dazu bestimmt, eine selbsttätige Zentrierung in Verbindung mit der Führungsfläche des Gehäuses zu bewirken. Zusätzlich kann noch eine Senkfläche am Ende der Nabe 9 angeordnet sein, z. B. in Form einer konischen Einsenkung oder einer Fangbohrung 9a.

Wie bereits erwähnt, ist der optische Sensor 8 in dem Gehäuse 11 untergebracht, wobei auf der Gehäuseoberseite elektrische Anschlüsse 13 in Form einer Steckerleiste vorhanden sind. Eine Leiterplatte bildet die Anschlüsse für die LED und den optischen Sensor.

Seitlich am Gehäuse 11 sind Schlitze 12 angeordnet, in die die Bajonettsegmente 5 der Grundplatte 4 eingeklinkt werden können. Die Schlitze 12 sind trapezförmig gestaltet und weisen eine obere Schrägfläche 12a auf, die mit einer Schrägfläche 5a der Bajonettsegmente korrespondiert.

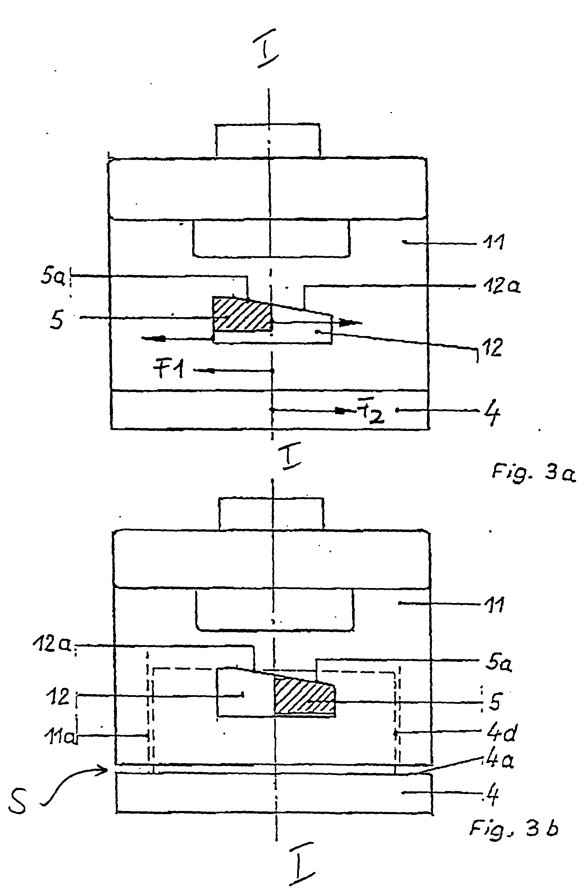

In den Figuren 2 und 3 ist die Funktion der Schlitzte und die Ausbildung der Bajonettsegmente noch deutlicher zu erkennen. Zu beachten ist, daß in Figur 3b die Grundplatte 4 mit den Vorsprüngen 5a, die zu einem Bafonettsegment gehören, im verspannten Zustand mit dem Gehäuse 11 dargestellt sind. Dabei sind die vertikalen Führungsflächen 4d zwischen der Grundplatte 4 und Gehäuseinnenwand 11a im Eingriff, so daß eine horizontale Zentrierung der beiden Baugruppenhälften erfolgt ist.

Wie aus Figur 1 und 2 ersichtlich, fluchten die Außenwände von Gehäuse, Grundplatte und Motor. Im Innern des Gehäuses befindet sich der Taktscheibenhalter in Form der Nabe 9 mit der Taktscheibe 10, die beispielsweise durch Verkleben an dem Taktscheibenhalter befestigt ist.

Der Taktscheibenhalter und damit die Taktscheibe 10 ist durch einen Sicherungsring 14 gegen ein unbeabsichtigtes Herausfallen an dem Gehäuse 11 gesichert. Gleichzeitig sorgt der Sicherungsring 14 dafür, daß ausreichend Spiel für eine Zentrierung der Taktscheibe 10 auf der Motorwelle vorhanden ist.

Hierzu hat der Taktscheibenhalter an seinem dem Motor zugewandten Ende eine Fangbohrung 9a, mit der die Vertikalachsen von Welle und Taktscheibe in eine Linie gebracht werden können. Nach dem Einschieben der Welle 2 in den Taktscheibenhalter wird gleichzeitig eine Zentrierung und feste Verbindung, z.B. durch Pressung, erzeugt. Dies kann vorteilhafterweise dadurch geschehen, daß die im Durchmesser verengte Nabe geschlitzt ist und dadurch ein Pressitz zwischen Nabe und Motorwelle auch bei geringen Anpreßkräften bewirkt wird.

Das Aufpressen erfolgt durch axialen Druck auf das Gehäuse in Richtung der Motorwelle. Die Fläche 16 des Gehäuses legt sich dabei auf die Fläche 17 der Nabe 9 und bringt diese und die mit ihr in Verbindung stehende Taktscheibe in die richtige Position für eine zentrische Anordnung im Gehäuse 11.

Bei der weiteren Montagefolge wird das Gehäuse von der Anschlußseite gemäß Figur 1 her gesehen in Uhrzeigerrichtung verdreht, wobei durch die schrägen Flächen 5a der Bajonettsegemente 5 und die schrägen Flächen 12a des Gehäuses 11 ein Anheben des Gehäuses, wie in Fig. 3a, 6 dargestellt, erfolgt. Der dabei entstehende Spalt S sorgt dafür, daß die Fläche 17 der Nabe freigegeben wird. Gleichzeitig wird das Gehäuse mit am Umfang verteilten Rastermarken 15 über entsprechende Gegenrasterungen 6 an der Grundplatte 4 fixiert.

Zur Montage sind zwei einfache Bewegungen des Gehäuses erforderlich, die ohne Spezial- oder Hilfswerkzeuge und ggf. auch durch einen Automaten ausgeführt werden können:

### 1. Andrücken gegen die Grundplatte

Hierbei wird ein Druckring 16 gegen die Andruckfläche 17 der Nabe 9 gepreßt und dabei die Welle 2 eingefangen (s.o.).

### 2. Verdrehen um Vertikalachse I/I gemäß Fig. 3a, 3b

Durch Drehung des Gehäuses 11 bzw. Gegendrehung der Grundplatte 4 (Pfeile F1, F2), wird auf den Schrägflächen 5a der Bajonettsegmente 5 eine Vertikalkraftkomponente erzeugt, wodurch das Gehäuse 11 von der Grundplatte 4 entfernt und dadurch ein ausreichendes Spiel S für die Taktscheibe 10 sichergestellt. Dieser Drehvorgang beinhaltet daher das gleichzeitige Fixieren durch Einrasten der Bajonettsegmente und die "Freischaltung" der Taktscheibe, so daß mit einer Drehbewegung die sonst zeitraubende Montage erledigt ist.

## Patentansprüche

1. Encoder mit teilbarem Gehäuse zum stirnseitigen Anflanschen an einen Motor (1) der zumindest an der Flanschebene eine in das Gehäuse hineinragende Motorwelle (2) aufweist,
wobei in dem Gehäuse ein Sensor, eine Leiterplatte und eine Taktscheibe (10) untergebracht sind und
wobei die Taktscheibendrehachse zentrisch auf der Motorwelle justiert ist,
dadurch gekennzeichnet,
daß das Gehäuse aus einer Grundplatte (4) und einem Gehäuseoberteil (11) besteht, die ineinander steckbar sind,
daß auf der Grundplatte (4) ringförmige Bajonettsegmente (5.1, 5.2, 5.3) angeordnet sind,
die in entsprechende Aussparungen (12) des Gehäuseoberteils eingreifen,
daß an oder in der Nähe des Außenrandes der Grundplatte (4) Führungsflächen (5a) ausgebildet sind, die mit entsprechenden Gegenflächen am Gehäuseoberteil eine Gleitführung bilden und die beim Einstecken durch Drehung in Umfangsrichtung zusammenwirken,
und daß in einer Dachfläche des Gehäuseoberteils konzentrisch zur Motorwelle ein Anpreßring (16) für die Justierung der Taktscheibe (10) auf der Motorwelle (2) ausgebildet ist.

2. Encoder nach Anspruch 1,
dadurch gekennzeichnet,
daß die Führungsflächen (5a) als Teil der Bajonettsegmente (5) auf der Grundplatte (4) angeordnet sind.

3. Encoder nach einem der vorhergehenden Ansprüche,
dadurch gekennzeichnet,
daß die Taktscheibe (10) eine Nabe (9) aufweist, in die eine zur Dachfläche des Gehäuseoberteils aus der Taktscheibenebene herausragende Gegenpreßfläche (17) eingeformt ist und daß die zur Motorwelle (2) hinweisende Seite der Naben als Führungsschaft ausgebildet ist.

4. Encoder nach einem der vorhergehenden Ansprüche,
dadurch gekennzeichnet,
daß am Austrittsende des Führungsschaftes eine Fangbohrung für das Einfangen der Motorwelle angeordnet ist.

5. Encoder nach einem der vorhergehenden Ansprüche,
dadurch gekennezeichnet,
daß am inneren Gehäuseumfang Rastermarken (15) und an den entsprechenden Umfangsseiten der Grundplatte Gegenrasterungen (6) zur Fixierung der Gehäuseteile angeordnet sind.

6. Encoder nach einem der vorhergehenden Ansprüche,
dadurch gekennzeichnet,
daß die Rastermarken und die Gegenrasterungen sägezahnförmig ausgebildet sind.

7. Encoder nach einem der vorhergehenden Ansprüche,
dadurch gekennzeichnet,
daß die Bajonettsegmente (5.1, 5.2, 5.3) eine im wesentlichen parallel zur Flanschebene verlaufende Kontaktfläche und eine schräg zur Grundplattenebene verlaufende Leitfläche (5a) aufweisen und daß im Gehäuseoberteil eine entsprechend geneigte Gegenleitfläche (12a) in den Aussparungen (12) ausgebildet ist,
wobei die Gegenleitfläche (12a) gegenüber der Leitfläche verlängert ist
und daß bei einer Drehbewegung des Gehäuseoberteils um die Taktscheibenachse die Gegenfläche (12a) auf der Leitfläche (5a) der Bajonettsegmente (5) in Achsrichtung von der Grundplatte weg beweglich ist.

8. Encoder nach einem der vorhergehenden Ansprüche,
dadurch gekennzeichnet,
daß die Taktscheibe im Gehäuseoberteil durch einen Sicherungsring (14) mit Spiel gehalten wird.

## Claims

1. An encoder having a dividable housing for being flanged, at one end, to a motor (1) which, at least in the flange plane, comprises a motor shaft (2) projecting into the housing, wherein a sensor, a conductor plate and a cycle disc (10) are accommodated in the housing, and
wherein the rotational axis of the cycle disc is adjusted centrally on the motor shaft,
characterised in
that the housing consists of a base plate (4) and an upper housing part (11) which can be inserted into one another,
that annular bayonet segments (5.1, 5.2, 5.3) are arranged on the base plate (4), which engage corresponding recesses (12) in the upper housing part,
that, at, or in the vicinity of, the outer edge of the base plate (4), there are provided guiding faces (5a) which, together with corresponding counter faces at the upper housing part, form sliding guiding means and which, when being inserted, cooperate with one another through rotation in the circumferential direction, and
that a pressure ring (16) for adjusting the cycle disc (10) on the motor shaft (2) is provided in a roof face of the upper housing part so as to be positioned concentrically relative to the motor shaft.

2. An encoder according to claim 1,
characterised in
that the guiding faces (5a), as part of the bayonet segments (5), are arranged on the base plate (4).

3. An encoder according to any one of the preceding claims,
characterised in
that the cycle disc (10) comprises a hub (9) into which there is formed a counter pressure face (17) projecting from the cycle disc plane towards the roof face of the upper housing part, and
that the hub end pointing towards the motor shaft (2) constitutes a guiding face.

4. An encoder according to any one of the preceding claims,
characterised in
that at the exit end of the guiding shaft there is arranged a catching bore for catching the motor shaft.

5. An encoder according to any one of the preceding claims,
characterised in
that on the inner housing circumference, there are provided engagement marks (15) and on the corresponding circumferential sides of the base plate counter engagement means (6) for fixing the housing parts.

6. An encoder according to any one of the preceding claims,
characterised in
that the engagement marks and the counter engagement means are saw-tooth-shaped.

7. An encoder according to any one of the preceding claims,
characterised in
that the bayonet segments (5.1, 5.2, 5.3) each comprise a contact face extending substantially parallel to the flange plane and a guiding face (5a) extending at an angle relative to the base plate plane, and
that, in the upper housing part, there is formed a correspondingly inclined counter guiding face (12a) in the recesses (12),
wherein the counter guiding face (12a) has a longer length than the guiding face (5a), and
that, when the upper housing part carries out a rotational movement around the cycle disc axis, the counter face (12a) on the guiding face (5a) of the bayonet segments (5) can be moved in the axial direction away from the base plate.

8. An encoder according to any one of the preceding claims,
characterised in
that the cycle disc is held in the upper housing part with play by a securing ring (14).

## Revendications

1. Codeur comportant un boîtier pouvant être divisé et destiné à être raccordé frontalement par bride à un moteur (1) qui comporte au moins au niveau du plan de la bride, un arbre (2) qui pénètre dans le boîtier, un capteur, une plaquette à circuits imprimés et un disque de synchronisation (10) étant logés dans le boîtier, tandis que l'axe de rotation du disque de synchronisation est ajusté d'une manière centrée sur l'arbre du moteur,
caractérisé en ce
que le boîtier est constitué par une plaque de base (4) et une partie supérieure de boîtier (11), qui peuvent être enfichées l'une dans l'autre,
que sur la plaque de base (4) sont disposés des segments annulaires à baïonnette (5.1, 5.2, 5.3),
qui s'engagent dans des évidements correspondants (12) de la partie supérieure du boîtier,
que sur ou à proximité du bord extérieur de la plaque de base (15) sont formées les surfaces de guidage (8), qui forment un dispositif de guidage à glissement avec des surfaces antagonistes correspondantes sur la partie supérieure du boîtier et qui coopèrent, lors de l'enfichage, sous l'effet d'une rotation dans la direction circonférentielle, et
qu'une bague de serrage (16) pour l'ajustement du disque de synchronisation (10) sur l'arbre (2) du moteur est formée dans une surface formant toit de la partie supérieure du boîtier, concentriquement à l'axe du moteur.

2. Codeur selon la revendication 1, caractérisé en ce
que les surfaces de guidage (5a) sont disposées en tant que parties des segments à baïonnette (5) sur la plaque de base (4).

3. Codeur selon l'une des revendications précédentes, caractérisé en ce
que le disque de synchronisation (10) comporte un moyeu (9), dans lequel est formée une surface de serrage antagoniste (17), qui ressort du plan du disque de synchronisation en direction de la surface formant toit de la surface supérieure du boîtier, et que le côté du moyeu, qui est tourné vers l'arbre (2) du moteur, est agencé sous la forme d'une tige de guidage.

4. Codeur selon l'une des revendications précédentes, caractérisé en ce qu'un perçage de logement servant à loger l'arbre du moteur est formé dans l'extrémité de sortie de la tige de guidage.

5. Codeur selon l'une des revendications précédentes, caractérisé en ce
que des marques d'encliquetage (15) sont disposées sur la périphérie intérieure du boîtier et que des organes d'encliquetage antagonistes (6) sont prévus sur les côtés périphériques correspondants de la plaque de base, pour fixer les parties du boîtier.

6. Codeur selon l'une des revendications précédentes, caractérisé en ce
que les marques d'encliquetage et les éléments d'encliquetage antagonistes sont agencés en forme de dents de scie.

7. Codeur selon l'une des revendications précédentes, caractérisé en ce
que les segments à baïonnette (5.1, 5.2, 5.3) possèdent une surface de contact qui s'étend parallèlement au plan de la bride, et une surface de guidage (5a), qui s'étend obliquement par rapport au plan de la plaque de base, et
que dans la partie supérieure du boîtier, une surface de guidage antagoniste (12a), qui est inclinée de façon correspondante, est prévue dans les évidements (12),
la surface de guidage antagoniste (12a) étant prolongée par rapport à la surface de guidage, et
que lors d'un mouvement de rotation de la partie supérieure du boîtier autour de l'axe du disque de synchronisation, la surface antagoniste (12a) est déplaçable sur la surface de guidage (5a) des segments à baïonnette (5) dans la direction axiale, à partir de la plaque de base.

8. Codeur selon l'une des revendications précédentes, caractérisé en ce
que le disque de synchronisation est retenu avec un certain jeu au moyen d'une bague de sécurité (14) dans la partie supérieure du boîtier.
